# EUROPEAN PATENT APPLICATION

(11) **EP 3 608 036 A1**
(43) Date of publication of application: **12.02.2020**
(21) Application number: 18781847.1
(22) Date of filing: 03.04.2018
(51) Int. Cl.: B21K 1/12, B21J 5/02, B60B 35/06, B60G 9/04

(54) **FRONT AXLE BEAM AND METHOD FOR PRODUCING SAME**

(30) Priority: 05.04.2017 JP 2017074875
(71) Applicant: Nippon Steel Corporation, Tokyo 100-8071 (JP)
(72) Inventor: TAMURA, Kenji, Tokyo 100-8071 (JP); IMANISHI, Kenji, Tokyo 100-8071 (JP); HWANG, Sam Soo, Tokyo 100-8071 (JP); YABUNO, Kunihiro, Tokyo 100-8071 (JP); YOSHIDA, Kunihiro, Tokyo 100-8071 (JP); ISHIHARA, Koichiro, Tokyo 100-0006 (JP)
(74) Representative: Zimmermann & Partner Patentanwälte mbB
(86) International application number: PCT/JP2018/014206
(87) International publication number: WO 2018/186376

(57) **Abstract**

The production method disclosed includes a first step, a second step and a third step to be performed in this order. In the first step, a steel material is forged by dies, whereby a forged product including a rough web part (220) and four plate-shaped rough flange parts is produced. In the second step, at least one specified rough flange part, which is at least one of the four rough flange parts, is pressed by a first die, whereby a first bent portion bending outward in an up-down direction VD of the forged product is formed in the specified rough flange part. In the third step, the edge of the first bent portion is pressed by a second die (320) inward in the up-down direction VD, whereby the edge is deformed and a second bent portion (232b) is formed. In the third step, the edge of the specified flange part is deformed while the edge is kept from deforming in a front-rear direction HD.

## Description

### TECHNICAL FIELD

The present invention relates to a front axle beam and a production method thereof.

### BACKGROUND ART

Usually, front wheels of a vehicle body (for example, front wheels of a motor truck, a bus or the like, excluding motor cycles) are attached to a front axle beam (which will be hereinafter referred to as a "front axle" in some cases), and the front axle beam with the front wheels attached thereto is used to support the vehicle body. The front axle is important as a part for transmitting the load of the vehicle body to the right and left front wheels and as a structure maintaining part. The front axle keeps the wheels in fixed positions and ensures steerability of the front wheels, thereby ensuring driving stability. Also, at a time of braking, the front axle functions as a braking force transmission route. Thus, the front axle is a part which strongly affects traveling performance, steering performance and braking performance. The front axle is required to have high rigidity and therefore is heavy. From the viewpoint of fuel efficiency, on the other hand, weight reduction of the front axle is demanded.

Japanese Patent Application Publication No. 2003-285771 (Patent Literature 1) provides a front axle that decreases aerodynamic drag while the vehicle is running. The object of the invention disclosed in Patent Literature 1 is to decrease aerodynamic drag and thereby to improve fuel efficiency.

Methods for producing a front axle have been provided up to now. Japanese Patent Application Publication No. 2009-106955 (Patent Literature 2) discloses a method for producing an axle beam with a right and a left spring attachment seat. In this production method, one of the spring attachment seats is press formed at a first pressing step, and the other spring attachment seat is press formed at a second pressing step.

One of the measures to reduce the weight of a front axle is increasing the rigidity of the front axle. An increase in the rigidity of a front axle will permit the front axle to have rigidity comparable to the rigidity of a conventional front axle while having a lighter weight and/or a smaller size. An increase in the rigidity of the front axle also will permit the front axle to improve various properties associated with rigidity while keeping the cross-sectional size and/or the weight same as those of a conventional front axle. Therefore, a new technique for increasing the rigidity of a front axle is demanded.

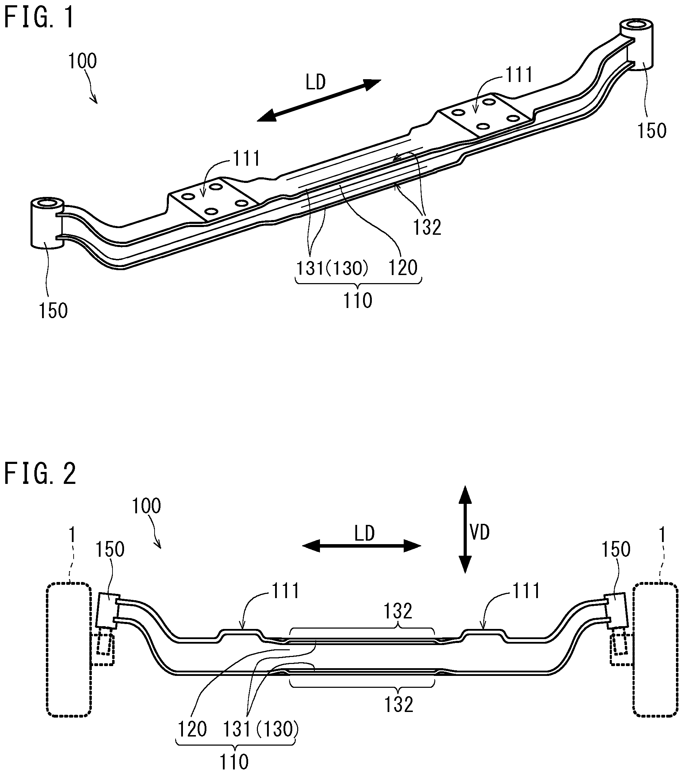

For driving stability, generally, heavy parts are arranged at low levels with respect to the vehicle height direction. Therefore, it is preferred that an engine, which is to be mounted on the front axle, is positioned at a low level with respect to the vehicle height direction. On both ends of the front axle, king-pin attachment parts are provided. An underbody is connected to the front wheels. Kingpins pass through the respective king-pin attachment parts along the body height direction from above and are inserted into the underbody attached to the front wheels. Thus, the kingpins connect the front axle and the wheels together. In this structure, when the vehicle body is steered, the front wheels turn about the respective kingpins. To form this structure of the vehicle body, the front axle is, for example, shaped like a bow of which center portion with respect to the vehicle width direction is at a low level and of which end portions with respect to the vehicle width direction are at a high level as shown in FIG. 2. The front axle has an H-shaped cross section, but unlike an H-steel, the front axle is not produced by a universal rolling machine. This is because it is impossible to form the bow-like shape by using a universal rolling machine.

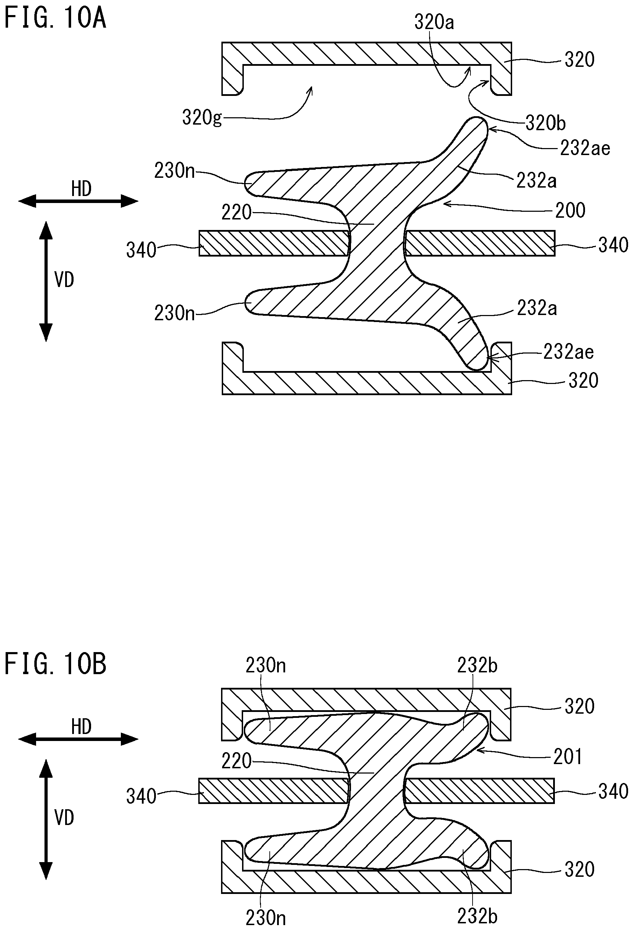

A front axle is usually produced by die forging. In a case of producing a front axle by die forging, it is necessary to make draft angles Q and Q' as shown in FIG. 10, for example, for release of the product from the dies. This creates limitations on the shape of the front axle and eventually constrains improvement of the front axle in rigidity.

Meanwhile, around such a front axle, an engine and movable parts for steering are densely arranged. Accordingly, the front axle is required to be fitted in a small space without interfering with these surrounding parts. Therefore, a technique for increasing the rigidity of a front axle without increasing the cross-sectional size of the front axle is especially demanded.

### CITATION LIST

### PATENT LITERATURES

Patent Literature 1: Japanese Patent Application Publication No. 2003-285771
Patent Literature 2: Japanese Patent Application Publication No. 2009-106955

### SUMMARY OF INVENTION

### TECHNICAL PROBLEM

In the circumstances, an object of the present invention is to provide a front axle beam with increased rigidity, and a production method of the front axle beam.

### SOLUTION TO PROBLEM

A production method according to an embodiment of the present invention is a method for producing a front axle beam including a beam part, the beam part including a web part and flange parts joined on both sides of the web part and having an H-shaped cross section. In the production method, the flange parts are placed between dies, and the flange parts are pinched by the dies in a direction in which the flange parts protrude and thereby forged. Further, at least one of the flange parts is pressed in a direction perpendicular to a web part extending direction in the cross section of the beam part, whereby the edge of the flange part is bent outward in the web part extending direction in the cross section of the beam part.

A front axle beam according to an embodiment of the present invention is a front axle beam including a beam part including a web part and flange parts joined on both sides of the web part and having an H-shaped cross section. At least one of the flange parts has a bent portion in which a thickness center line of the flange part curves outward in a web part extending direction in the cross section of the beam part.

### ADVANTAGEOUS EFFECTS OF INVENTION

The present invention provides a front axle beam with high rigidity. The production method according to the present invention facilitates production of the front axle beam.

### BRIEF DESCRIPTION OF DRAWINGS

[FIG. 1] FIG. 1 is a perspective view schematically showing an exemplary front axle according to a first embodiment.
[FIG. 2] FIG. 2 is a view schematically showing the front side of the front axle shown in FIG. 1.
[FIG. 3] FIG. 3 is a view schematically showing the top side of the front axle shown in FIG. 1.
[FIG. 4] FIG. 4 is a view schematically showing a cross section of the front axle shown in FIG. 1.
[FIG. 5A] FIG. 5A is a perspective view schematically showing a part of an exemplary forged and flash-trimmed product produced by a production method according to a second embodiment.
[FIG. 5B] FIG. 5B is a view schematically showing a cross section of the forged product shown in FIG. 5A.
[FIG. 6A] FIG. 6A is a cross-sectional view schematically showing a state before a start of deformation in an exemplary second step.
[FIG. 6B] FIG. 6B is a cross-sectional view schematically showing a state on completion of deformation in the exemplary second step shown in FIG. 6A.
[FIG. 7A] FIG. 7A is a cross-sectional view schematically showing a state before a start of deformation in an exemplary third step.
[FIG. 7B] FIG. 7B is a cross-sectional view schematically showing a state on completion of deformation in the exemplary third step shown in FIG. 7A.
[FIG. 8] FIG. 8 is a cross-sectional view showing a change in the shape of the forged product caused by bending (the second and third steps).
[FIG. 9A] FIG. 9A is a cross-sectional view schematically showing a state before a start of deformation in another exemplary second step.
[FIG. 9B] FIG. 9B is a cross-sectional view schematically showing a state on completion of deformation in the exemplary second step shown in FIG. 9A.
[FIG. 10A] FIG. 10A is a cross-sectional view schematically showing a state before a start of deformation in another exemplary third step.
[FIG. 10B] FIG. 10B is a cross-sectional view schematically showing a state on completion of deformation in the exemplary third step shown in FIG. 10A.
[FIG. 11A] FIG. 11A is a cross-sectional view schematically showing a state before a start of deformation in still another exemplary third step.
[FIG. 11B] FIG. 11B is a cross-sectional view schematically showing a state on completion of deformation in the exemplary third step shown in FIG. 11A.
[FIG. 12] FIG. 12 is a view showing cross-sectional shapes of samples used in a simulation test.
[FIG. 13] FIG. 13 is a view showing a test method adopted in the simulation test.
[FIG. 14] FIG. 14 is a view schematically showing a cross section of a front axle according to the embodiment of the present invention.

### DETAILED DESCRIPTION OF EMBODIMENTS

As a result of the inventors' earnest consideration, they found it possible to increase the rigidity of a front axle by adjusting the cross-sectional shape of the front axle. They also found a method for producing a front axle with high rigidity. The present invention has been made based on these findings.

A production method according to an embodiment of the present invention is a method for producing a front axle beam including a beam part, the beam part including a web part and flange parts joined on both sides of the web part and having an H-shaped cross section. In the production method, the flange parts are placed between dies, and the flange parts are pinched by the dies in a direction in which the flange parts protrude and thereby forged. Further, at least one specified flange part, which is at least one of the flange parts, is pressed in a direction perpendicular to a web part extending direction in the cross section of the beam part, whereby the edge of the specified flange part is bent outward in the web part extending direction in the cross section of the beam part.

In the production method, it is preferred that a convex die is inserted in between the specified flange part and another one of the flange parts located opposite to the specified flange part to bend the edge of the specified flange part outward in the web part extending direction in the cross section of the beam part.

In the production method, it is further preferred that the bent edge of the specified flange part is pressed from outside in the web part extending direction in the cross section of the beam part while the bent edge is retained from outside in the direction perpendicular to the web part extending direction in the cross section of the beam part. In this case, it is preferred that the bent edge of the specified flange part is pressed from outside in the web part extending direction in the cross section of the beam part such that the front axle beam has a maximum width in a region where the web part is present in the cross section of the beam part.

In the production method, the convex die preferably includes a convex portion bulging toward the web part, and the convex portion preferably includes two adjacent surfaces. It is preferred that each of the adjacent surfaces inclines in such a manner to become more distant from the web part at an outer side in the web part extending direction in cross section of the beam part.

In the production method, it is preferred that the bent edge of the specified flange part is placed in a concave portion of a concave die and is pressed from outside in the web part extending direction in the cross section of the beam part.

A front axle beam according to an embodiment of the present invention is a front axle beam including a beam part including a web part and flange parts joined on both sides of the web part and having an H-shaped cross section. At least one of the flange parts has a bent portion in which a thickness center line of the flange part curves outward in a web part extending direction in the cross section of the beam part.

In another aspect, a production method according to an embodiment of the present invention is a method for producing a front axle beam including a beam part and two king-pin attachment parts provided to both ends of the beam part with respect to a length direction of the beam part. The beam part includes a web part extending in the length direction, and four flange parts protruding frontward and rearward from an upper side and a lower side of the web part, respectively. The production method comprises: a first step of forging a steel material with dies to produce a forged product that includes a rough web part to be formed into the web part, and four rough flange parts protruding frontward and rearward from an upper side and a lower side of the rough web part, respectively; a second step of pressing at least one specified rough flange part, which is at least one of the four rough flange parts, of the forged product with at least one first die to form a first bent portion in the specified rough flange part, the first bent portion being bent outward in an up-down direction of the forged product; and a third step of pressing an edge of the first bent portion with at least one second die to deform the edge inward in the up-down direction to form a second bent portion in the specified rough flange part. The first step, the second step and the third step are performed in this order. In the third step, the edge of the specified rough flange part is deformed while the edge is kept from deforming in a front-rear direction.

In the third step of the production method, it is preferred that the edge of the specified rough flange part is deformed such that the edge does not protrude outward in the up-down direction from any other part of the specified rough flange part.

In the production method, the second die preferably includes a first surface to press the edge inward in the up-down direction and a second surface to keep the edge from deforming in the front-rear direction.

In the production method, the at least one specified rough flange part may include a first specified rough flange part and a second specified rough flange part that are arranged in the up-down direction. The first die may include a first inclined surface and a second inclined surface that form an angle greater than 180 degrees with each other. In this case, in the second step, the first specified rough flange part may be pressed by the first inclined surface of the first die, and the second specified rough flange part may be pressed by the second inclined surface of the first die. In this case, further, the third step may be performed by use of two second dies that are arranged on opposite sides, in the up-down direction, of the forged product.

In the production method, the four rough flange parts may be a first specified rough flange part, a second specified rough flange part and two normal rough flange parts, respectively. In this case, the second step may be performed while the two normal rough flange parts are held. In the third step, the second die may press the respective edges of the first bent portions of the specified rough flange parts and may press the normal rough flange parts to prevent deformation of the normal rough flange parts.

In the production method, the at least one specified rough flange part may include a first, a second, a third and a fourth specified rough flange part, the first and second specified rough flange parts arranged in the up-down direction, and the third and fourth specified rough flange parts arranged in the up-down direction. In this case, in the second step, the first and second specified rough flange parts may be pressed by a first inclined surface and a second inclined surface, respectively, of one first die, and the third and fourth specified rough flange parts may be pressed by a first inclined surface and a second inclined surface, respectively, of another first die.

In the production method, the second step may be performed with the forged product held between two third dies in the up-down direction. In the production method, the third step may be performed with the rough web part of the forged product held between two fourth dies in the front-rear direction.

In still another aspect, a front axle beam according to an embodiment of the present invention includes a beam part, and two king-pin attachment parts provided to both ends of the beam part with respect to a length direction of the beam part. The beam part includes a web part extending in the length direction, and four flange parts protruding frontward and rearward from an upper side and a lower side of the web part, respectively. At least one of the four flange parts is a specified flange part including a bent portion. An outer surface of the bent portion with respect to an up-down direction of the front axle beam inclines inward in the up-down direction and thereafter inclines outward in the up-down direction as a distance from the web part increases.

In the front axle beam, an edge of the bent portion does not need to protrude outward in the up-down direction from any other part of the bent portion.

An embodiment of the present invention will hereinafter be described. The present invention is not limited to the embodiment below.

In this specification, unless any specific mention is made, directions concerning a front axle and components thereof mean directions when the front axle is used. For example, unless any specific mention is made, an up-down direction concerning a front axle means the up-down direction when the front axle is used. In other words, the up-down direction concerning the front axle means the vehicle height direction. Likewise, a right-left direction concerning the front axle and a front-rear direction concerning the front axle mean these directions when the front axle is used. Specifically, the right-left direction concerning the front axle means the vehicle width direction. The front-rear direction concerning the front axle means the vehicle length direction. The front axle includes a beam part having an H-shaped cross section. This beam part includes a plate-like web part, and four plate-like flange parts protruding from both sides of the web part. When the front axle is used, the beam part is placed horizontally. In a cross section of the front axle, the web part extends in the up-down direction, and the four flange parts protrude in the front-rear direction. Accordingly, in the cross section of the front axle, the up-down direction is the web part extending direction, and the front-rear direction is a direction perpendicular to the web part extending direction. Further, a front side and a rear side of the front axle conform with the front side and the rear side of the vehicle in which the front axle is used. However, in a case where the front axle has a symmetric shape with respect to the front-rear direction, either one of these sides is considered as a front side, and the other side is considered as a rear side. Moreover, unless any specific mention is made, directions concerning an intermediate product of the front axle (a forged product) and components thereof conform with the directions concerning the front axle as a final product.

### (Production Method of Front Axle Beam)

A production method according to an embodiment is a method for producing a front axle (front axle beam) including a beam part, and two king-pin attachment parts provided to both ends of the beam part with respect to the length direction of the beam part. The beam part includes a web part extending in the length direction of the beam part, and four flange parts protruding frontward and rearward from the upper and the lower side of the web part, respectively. Thus, the production method according to the embodiment is a method for producing a front axle (front axle beam) including a beam part that includes a web part and flange parts joined on both sides of the web part and has an H-shaped cross section. In this disclosure, joining means merely unifying but does not always mean connecting by welding, fastening or the like.

This production method includes a first step and a second step, which will be described later. This production method further includes a third step, which will be described later, as well as the first step and the second step. The first, second and third steps are performed in this order.

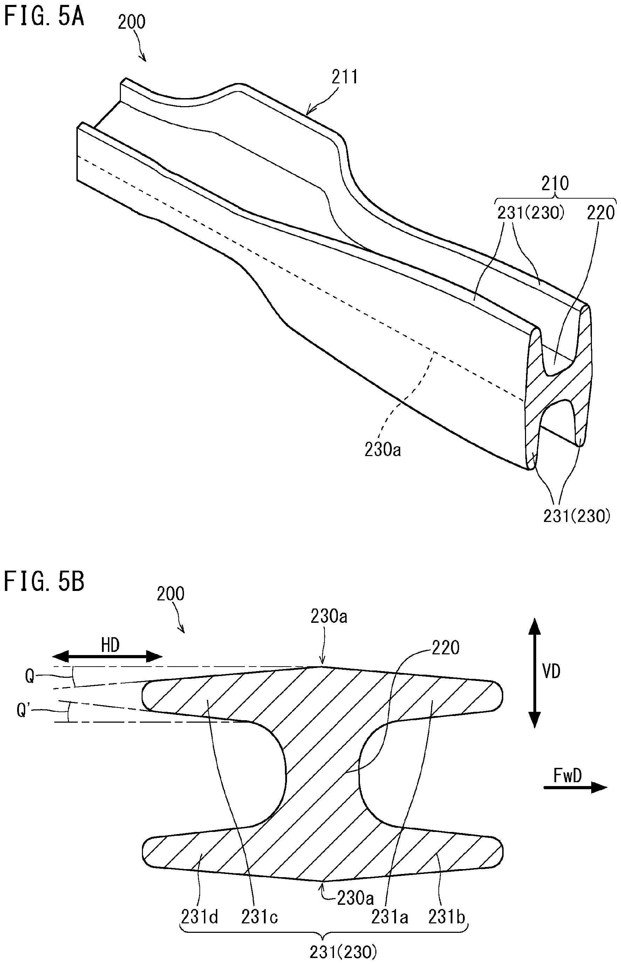

The first step is a step of forging a steel material with dies to produce a forged product (a die forging step). The forged product includes a rough web part to be formed into the web part, and four rough flange parts protruding frontward and rearward from the upper side and the lower side of the rough web part, respectively. The four rough flange parts are to be formed into the four flange parts of the front axle. The forged product obtained by the first step is, for example, the one shown in FIG. 5B.

In the production method according to the embodiment, the flange parts (the rough flange parts) are placed between dies, and the flange parts are pinched by the dies in a direction in which the flange parts protrude and thereby forged.

The forged product includes a rough beam part to be formed into the beam part. In the following paragraphs, the length direction of the beam part and the rough beam part will be referred to as "length direction LD" in some cases. The front-rear direction concerning the front axle and the forged product will be referred to as "front-rear direction HD", and the up-down direction concerning the front axle and the forged product will be referred to as "up-down direction VD".

Usually, the forged product, which is produced by the first step, has flash. Therefore, a flash-trimming step to remove the flash may be performed between the first step and the second step. The removal of flash may be performed by any flash-trimming method, and a conventional method may be adopted. In a case where such a flash-trimming step is performed, the forged product with the flash removed is sent to the second step.

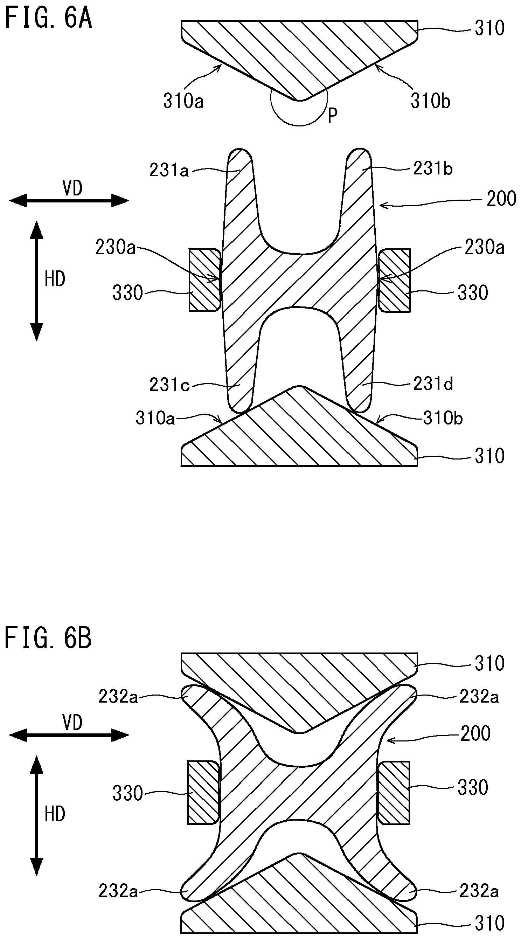

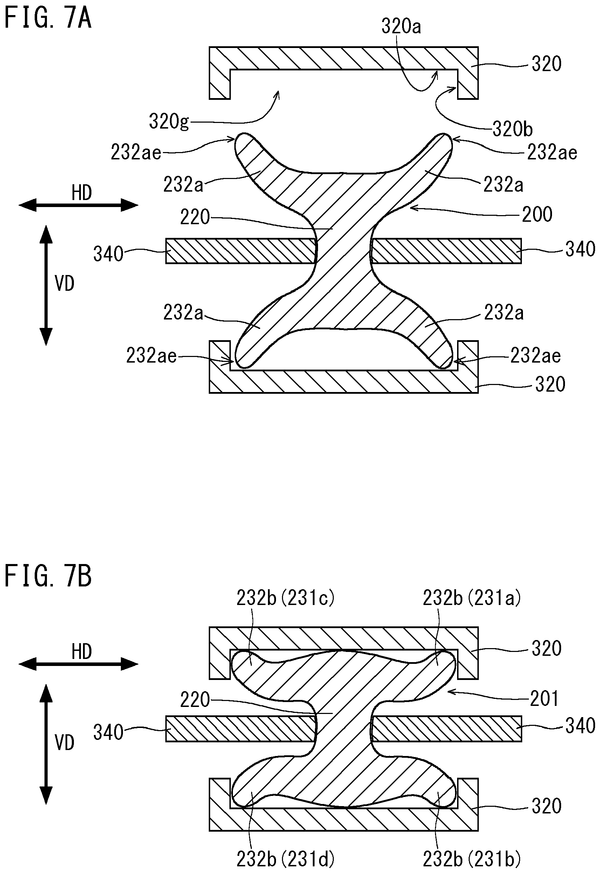

The second step is a step of pressing at least one specified rough flange part, which is at least one of the four rough flange parts of the forged product, with at least one first die to form a first bent portion (for example, a portion 232a shown in FIG. 7A) in the specified rough flange part, the first bent portion being bent outward in the up-down direction VD. For example, a product as shown in FIG. 6B is obtained by the second step.

Thus, in the production method according to the embodiment, the edge of the flange part (the specified rough flange part) is pressed in a direction perpendicular to the web part (rough web part) extending direction in a cross section of the forged product, and thereby the edge is bent outward in the web part (rough web part) extending direction in the cross section of the forged product.

In this specification, an inner side and an outer side of a flange part (or a rough flange part) mean the inner side and the outer side with respect to the up-down direction VD (the web part extending direction in a cross section) of the front axle or the forged product, unless it is inconsistent with the context. Regarding a flange part (or a rough flange part) protruding from the upper side of the web part (or the rough web part), the inner side means the lower side thereof, and the outer side means the upper side thereof. Regarding a flange part (or a rough flange part) protruding from the lower side of the web part (or the rough web part), the inner side means the upper side thereof, and the outer side means the lower side thereof.

The front axle production method including the first step and the second step makes it possible to produce a front axle including a flange part (a specified flange part) with a bent portion in which the thickness center line of the flange part (specified flange part) curves outward in the web part extending direction in a cross section of the front axle.

The first die is usually located on the front or rear side, along the front-rear direction HD, of the forged product and is movable in the front-rear direction HD relative to the forged product. In the second step, typically, one or two first dies are used.

At least one (one, two, three or four) of the four rough flange parts is a specified rough flange part. In view of manufacture, it is preferred that two rough flange parts in alignment are bent at a time. Accordingly, in a preferred embodiment, two or four of the four rough flange parts are specified rough flange parts.

The third step is a step of pressing the edge of the first bent portion with at least one second die to deform the edge inward in the up-down direction VD and thereby to form a second bent portion (for example, a portion 232b in FIG. 7B) in the specified rough flange part. For example, a product as shown in FIG. 7B is obtained by the third step.

The second die is usually located on the upper or lower side, along the up-down direction VD, of the forged product and is movable in the up-down direction VD relative to the forged product. In the third step, typically, one or two second dies are used.

In the third step, while the edge of the first bent portion is kept from deforming in the front-rear direction HD, the edge is deformed. This permits the edge of the first bent portion to deform inward in the up-down direction VD while preventing the edge of first bent portion from stretching in the front-rear direction HD.

Thus, in the production method according to the embodiment, the edge of the outward bending flange part (specified rough flange part) is pressed from outside in the web part extending direction in a cross section of the forged product while the edge thereof is retained from outside in the direction perpendicular to the web part extending direction in a cross section of the forged product.

In the front axle production method including the above-described first, second and third steps, a second bent portion with a specific shape is formed. Specifically, a second bent portion with a specific outer surface with respect to the up-down direction VD is formed, and the outer surface inclines inward and thereafter inclines outward in the up-down direction VD as the distance from the web part increases.

The second bent portion may be formed over the entire length LD of the rough beam part or in some part of the length LD of the rough beam part. The front axle typically has two spring attachment seats. The second bent portion may be formed in the entire region or some of the region between the two spring attachment seats. The first bent portion is formed in a position corresponding to the position where the second bent portion is to be formed.

After the third step, usually, a coining step is performed. In the coining step, certain parts (for example, the spring attachment seats) are settled into particular shapes. The coining step may be performed at the same time as the third step. In other words, the coining step may be performed during the third step. In this case, the second die may be used also as a die for the coining.

In the third step, the edge of the first bent portion may be deformed such that the edge of the first bent portion will not be located on the outer side, in the up-down direction VD, of any other part of the first bent portion. This makes it possible to produce a front axle with high rigidity without increasing the cross-sectional size of the front axle. In an example of the third step, the edge of the first bent portion may be deformed to be located on the inner side, in the up-down direction VD, of some other part of the first bent portion. In this case, the front axle has a maximum width in the region where the web part is present.

The second die may include a first surface and a second surface. The first surface is a surface to press the edge of the first bent portion inward in the up-down direction VD. The second surface is a surface to keep the edge from deforming in the front-rear direction HD. In the third step, the edge of the first bent portion is pressed by the first surface while the edge is retained by the second surface. This makes it possible to deform the edge of the first bent portion inward in the up-down direction VD while preventing the edge of the first bent portion from stretching in the front-rear direction HD. No clear boundary is necessary between the first surface and the second surface. In the production method according to the embodiment, the edge of the outward bending flange part (specified flange part) is placed in a concave portion of a die, and the edge is pressed from outside in the web part (rough web part) extending direction in cross section.

The second die may have a concave portion. The bottom of the concave portion may function as the first surface, and a side surface of the concave portion may function as the second surface. An exemplary concave portion will be described in connection with the first embodiment below.

The at least one specified rough flange part may include a first specified rough flange part and a second specified rough flange part that are arranged in the up-down direction VD. The first die may include a first inclined surface and a second inclined surface that form an angle greater than 180 degrees with each other. In this case, in the second step, the first inclined surface of the first die may press the first specified rough flange part, and the second inclined surface of the first die may press the second specified rough flange part. This permits concurrent forming of at least two first bent portions. Thus, in the production method according to the embodiment, a convex die may be inserted between two opposite flange parts (specified rough flange parts), and thereby, the respective edges of the flange parts are bent outward in the web part extending direction in cross section. The convex die, for example, includes a convex portion bulging toward the web part, and the convex portion includes two adjacent surfaces. Each of these surfaces inclines in such a manner to become more distant from the web part at an outer side in the web part extending direction in cross section.

In this case, further, the third step may be performed with two second dies arranged in the up-down direction VD with the forged product in between. This permits concurrent forming of at least two second bent portions.

In the following paragraphs, the angle between the first surface and the second surface is referred to as an "angle P" in some cases. There is no limit to the angle P, and the angle P may be any angle, as long as it permits forming of the desired first bent portion. The angle P may be, for example, in the range from 190 to 300 degrees (preferably in the range from 200 to 270 degrees).

The four rough flange parts may include a first specified rough flange part and a second specified rough flange part that are arranged in the up-down direction VD, and the other two rough flange parts may be normal rough flange parts. In this case, the production method may meet the following conditions (1) and/or (2):
(1) the second step is performed while the two normal flange parts are held; and
(2) in the third step, the second die presses the edges of the first bent portions of the specified rough flange parts and at the same time presses the normal rough flange parts to prevent deformation of the normal rough flange parts.

The at least one specified rough flange part may include the first and second specified rough flange parts that are arranged in the up-down direction VD, and a third specified rough flange part and a fourth specified rough flange part that are arranged in the up-down direction VD. In other words, all the four rough flange parts may be specified rough flange parts. In this case, in the second step, the first and second specified rough flange parts may be pressed by the first surface and the second surface, respectively, of one first die, and the third specified rough flange part and the fourth specified rough flange part may be pressed by a first surface and a second surface, respectively, of another first die. In other words, the four specified flange parts may be pinched between two first dies.

The second step may be performed with the forged product held between two third dies in the up-down direction VD. From another point of view, the second step may be performed while the forged product is held between two third dies from opposite sides along a direction perpendicular to the moving direction of the first dies. There is no limit to the third dies, and any dies that hold the forged product during the second step may be used as the third dies.

The third step may be performed with the rough web part of the forged product held between two fourth dies in the front-rear direction HD. From another point of view, the third step may be performed while the forged product is held between two fourth dies from opposite sides along a direction perpendicular to the moving direction of the second dies. There is no limit to the fourth dies, and any dies that hold the forged product during the third step may be used as the fourth dies.

### (Front Axle Beam)

A front axle (a front axle beam) according to an embodiment of the present invention is produced by the production method according to the embodiment. The description of the production method according to the embodiment applies to the front axle according to the embodiment, and the overlapping description will be omitted from the following description of the front axle. Also, the description of the front axle applies to the production method according to the embodiment. The front axle according to the embodiment may be produced by any other method than the production method according to the embodiment.

The front axle according to the embodiment has a beam part including a web part, and four flange parts joined on both sides of the web part, and the beam part has an H-shaped cross section. At least one specified flange parts, which is at least one of the four flange parts, includes a bent portion in which the thickness center line of the flange part curves outward in the web part extending direction in a cross section of the front axle. In this disclosure, joining means merely unifying and does not always mean connecting by welding, fastening or the like.

The specified flange part with a bent portion in which the thickness center line of the flange part curves outward in the web part extending direction in a cross section of the front axle can be formed by the above-described first and second steps. In this case, the first bent portion formed in the second step becomes the bent portion of the specified flange part.

The specified flange part includes the above-described bent portion (first bent portion). Thus, the specified flange part includes a bent portion in which the thickness center line of the flange part curves outward in the web part extending direction in a cross section of the front axle. In this case, in a cross section of the front axle, the center of gravity of the specified flange part is located at a position relatively far from the center of gravity of the beam part. Accordingly, it is possible to increase the second moment of area of the specified flange part as compared with a conventional flat-plate-shaped flange part of a conventional front axle. Thereby, according to the embodiment, it becomes possible to improve the bending rigidity in the front-rear direction HD of the front axle. Further, it is possible to increase the polar moment of inertia of the specified flange part as compared with a normal flange part. Thereby, according to the embodiment, it is possible to improve the torsional rigidity of the front axle.

The front axle according to the embodiment includes not only the beam part but also two king-pin attachment parts provided to both ends of the beam part with respect to the length direction LD of the beam part. The beam part includes a web part, and four flange parts protruding frontward and rearward from the upper side and the lower side of the web part, respectively. At least one of the four flange parts is a specified flange part including a bent portion. Regarding the surface of the bent portion, the outer surface with respect to the up-down direction VD inclines inward in the up-down direction VD and thereafter inclines outward in the up-down direction VD as the distance from the web part increases.

Accordingly, from a point of view, the bent portion inclines inward in the up-down direction VD and thereafter inclines outward in the up-down direction VD as the distance from the web part increases.

The bent portion of the specified flange part can be formed by the above-described first to third steps. In this case, the second bent portion formed in the third step becomes the bent portion of the specified flange part.

The specified flange part includes the above-described bent portion (second bent portion). Specifically, the specified flange part includes a bent portion in which the thickness center line of the flange part curves outward in the web part extending direction in a cross section of the font axle. In this case, in the cross section of the front axle, in a limited range, the center of gravity of the specified flange part is located at a position relatively far from the center of gravity of the beam part (when compared with the positional relation between the center of gravity of the flange part and the center of gravity of the beam part in a conventional front axle). Accordingly, it is possible to increase the second moment of area of the specified flange part without increasing the cross-sectional size of the cross section of the front axle, as compared with a flat-plate-shaped flange part of a conventional front axle. Thereby, according to the embodiment, it becomes possible to improve the rigidity (bending rigidity in the front-rear direction HD and bending rigidity in the up-down direction VD) of the front axle without increasing the cross-sectional size of the cross section of the front axle. Further, it is possible to increase the polar moment of inertia of the specified flange part without increasing the cross-sectional size of the cross section of the front axle, as compared with a flange part of a conventional front axle. Thereby, according to the embodiment, it becomes possible to improve the torsional rigidity of the front axle without increasing the cross-sectional size of the cross section of the front axle.

From another point of view, when the bent portion of the specified flange part is viewed horizontally from a side in which the flange part protrudes, a part of the outer surface thereof with respect to the up-down direction VD is invisible. The bent portion with the invisible part has an inverse draft in a die forging step, and it is difficult to form the bent portion only by die forging. For this reason, when the bent portion is to be formed by the production method including a die forging step, it is necessary to perform the above-described bending step (the second step, or the second and third steps). On the contrary, the above-described bent portion can be formed easily by the above-described die forging step (first step) and the bending step (the second step, or the second and third steps). Accordingly, the front axle according to the embodiment has an advantage in terms of manufacturing.

As mentioned above, at least one (one, two, three or four) of the four flange parts is a specified flange part. In a preferred embodiment, two or four of the four flange parts are specified flange parts. Two flange parts may arrange in the up-down direction VD.

The inner surface of the bent portion with respect to the up-down direction VD may incline inward in the up-down direction VD and thereafter incline outward in the up-down direction VD as the distance from the web part increases. Alternatively, the inner surface of the bent portion with respect to the up-down direction VD may entirely incline outward in the up-down direction VD.

The edge of the bent portion does not need to protrude outward in the up-down direction VD from any other part of the bent portion. This permits achievement of a compact and high-rigidity front axle.

As mentioned above, the bent portion may be formed in at least some part of the region (in some part of the region or in the entire region) between the two spring attachment seats. For example, the bent portion may be formed in 50% or more of the region between the two spring attachment seats (based on the dimension in the length direction LD).

### (Producing Apparatus)

In another aspect, the present invention relates to a first producing apparatus and a second producing apparatus for producing a front axle. The first producing apparatus includes the above-described die used in the second step, and a mechanism for moving the die in the above-described way. The second producing apparatus includes the above-described die used in the third step, and a mechanism for moving the die in the above-described way. As the mechanisms for moving the dies, mechanisms used in conventional pressing machines may be used.

Some exemplary embodiments of the present invention will hereinafter be described with reference to the drawings. The embodiments which will be described below are only examples, and some parts of the embodiments below may be replaced with some parts of the above-described structure. In the following description, the same parts and members are denoted by the same reference numerals, and a repetitious description may be omitted. The drawings below are all schematic diagrams, and some parts that are unnecessary for the description may be omitted.

### (First Embodiment)

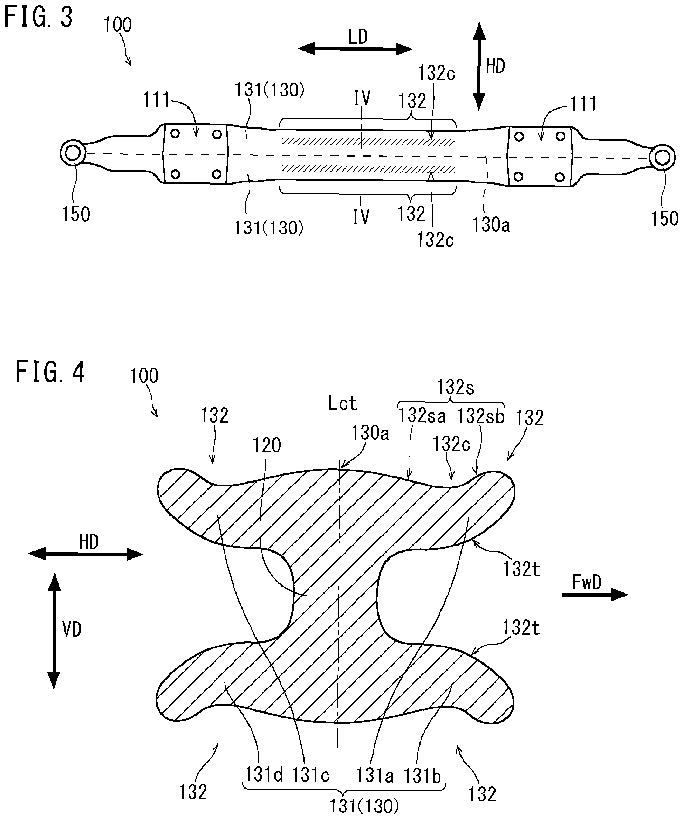

As a first embodiment, an exemplary front axle according to the present invention will be described. FIG. 1 is a perspective view of a front axle 100 according to the first embodiment. FIG.2 is a front view of the front axle 100, that is, a view when the front axle 100 is viewed horizontally from front. FIG. 3 is a top view of the front axle 100. FIG. 4 is a cross-sectional view along the line IV-IV in FIG. 3. In some of these drawings and the drawings which will hereinafter be referred to, the frontward direction from the front axle 100 (or a first forged product 200) is denoted by FwD. In some of the drawings, the up-down direction is denoted by VD, and the front-rear direction is denoted by HD. In some of the drawings, also, the length direction of the beam part 110 (or a rough beam part 210) is denoted by LD.

With reference to FIG. 1, the front axle (front axle beam) 100 includes a beam part 110, and two king-pin attachment parts 150 provided to both ends of the beam part 110 with respect to the length direction LD of the beam part 110. Each of the king-pin attachment parts 150 has a through-hole in which a kingpin is to be inserted. Typically, the front axle 100 has a shape that is substantially symmetric with respect to the center of the vehicle width, and the whole shape is generally like a bow. As shown in FIG. 2, each of the king-pin attachment parts 150 is connected to a tire 1 via the kingpin.

The beam part 110 includes a web part 120 and four flange parts 130. The four flange parts 130 protrude frontward and rearward from the upper side and the lower side of the web part 120, respectively. Specifically, one of the four flange parts 130 protrudes frontward from the upper side of the web part 120, and another one of the four flange parts 130 protrudes rearward from the upper side of the web part 120. Another one of the four flange parts 130 protrudes frontward from the lower side of the web part 120, and the other one of the four flange parts 130 protrudes rearward from the lower side of the web part 120. From another point of view, the beam part 110 includes a web part 120 and four flange parts 130 joined on both sides of the web part 120, and the beam part has an H-shaped cross section. At least one of the four flange parts 130 is a specified flange part 131 with a bent portion 132. FIGS. 1 to 4 show an example in which all of the four flange parts 130 are specified flange parts 131.

Now, the four specified flange parts 131 are referred to as a first to a fourth specified flange part 131a to 131d. In the example shown in FIG. 4, the specified flange parts 131 arranged vertically on the front side of the web part 120 are considered as the first and the second specified flange parts 131a and 131b. The specified flange parts 131 arranged vertically on the rear side of the web part 120 are considered as the third and the fourth specified flange parts 131c and 131d. However, any of the specified flange parts may be considered as any of the first to fourth specified flange parts. For example, two specified flange parts arranged in the front-rear direction may be considered as the first and second specified flange parts.

As shown in FIG. 4, the outer surface 132s, with respect to the up-down direction VD, of each bent portion 132 inclines inward in the up-down direction VD and thereafter inclines outward in the up-down direction VD as the distance from the web part 120 increases. Thus, the outer surface 132s includes an inward inclined surface 132sa and an outward inclined surface 132sb. In another point of view, a concavity 132c is formed on the surface 132s.

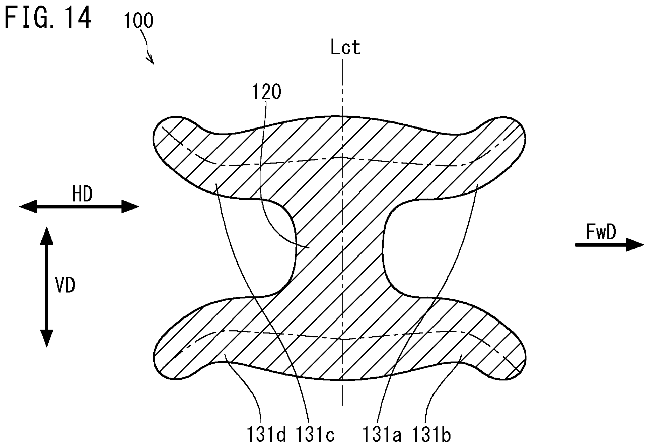

From another point of view, the front axle 100 according to the first embodiment is described as follows. FIG. 14 shows a cross section of the beam part 110 of the front axle 100 according to the embodiment, which corresponds to the front axle beam shown in FIG. 4. The beam part 110 has an H-shaped cross section. The beam part 110 includes a web part 120, and four flange parts 131a to 131d joined on both sides of the web part 120. Each of the flange parts 131a to 131d has a bent portion in which the thickness center line of the flange part curves outward in the extending direction of the web part 120 in the cross section of the beam part (in the up-down direction VD). The alternate long and short dash lines in FIG. 14 show the respective thickness center lines of the flange parts 131a to 131d.

Each bent portion 132 has an invisible part on the outer surface 132s when viewed horizontally from a direction in the front-rear direction HD. As described above, it is difficult to form this invisible part only by die forging.

The inner surface 132t of the bent portion 132 with respect to the up-down direction VD may incline inward in the up-down direction VD and thereafter incline outward in the up-down direction VD as the distance from the web part 120 increases. Alternatively, the inner surface 132t may entirely incline outward in the up-down direction VD. The inclination may increase as the distance from the web part increases.

From a point of view, two specified flange parts arranged in the front-rear direction HD are W-shaped in cross section (in the cross section shown in FIG. 4). In another point of view, each of the specified flange parts inclines inward in the up-down direction VD and thereafter inclines outward in the up-down direction VD.

On the two flange parts protruding from the upper side of the web part 120, two spring attachment seats 111 are formed. The two spring attachment seats 111 are spaced from each other and located in lengthwise symmetrical positions. Springs are placed on the spring attachment seats 111, and on top of the springs, a vehicle body (including an engine) is set. In the first embodiment, the bent portions 132 are formed in the region between the two spring attachment seats 111. However, the bent portions 132 may be formed in any other region.

In the example shown in FIG. 4, the boundary 130a between the two flange parts 130 (specified flange parts 131) that are adjacent to each other in the front-rear direction is located on a vertical line Let. The vertical line Let is a vertical line (a line parallel to the up-down direction VD) passing through the center of the web part 120 equidistant from the front side and the rear side of the web part 120 in a section perpendicular to the length direction LD. In the cross section shown in FIG. 4, the corner between each specified flange part 131 and the web part 120 is round (in the shape of a circular arc). In FIG. 4, the boundary between the web part 120 and the two specified flange parts 131 on the upper side of the web part 120 is a straight line connecting the ends of the circular arcs (the end of the circular arc on the side of the first flange part 131a and the end of the circular arc on the side of the third flange part 131c). The boundary between the web part 120 and the second and forth specified flange parts 131b and 131d is defined in the same manner.

In the example shown in FIG. 4, all the four flange parts 130 are specified flange parts 131 with a bent portion 132. However, it is only necessary that at least one of the flange parts 130 has a bent portion 132. Among the four flange parts 130, for example, only the two flange parts 130 that are arranged in the up-down direction may be specified flange parts 131. These two specified flange parts 131 may protrude frontward or may protrude rearward. Alternatively, only the two flange parts 130 that are arranged in the front-rear direction may be specified flange parts 131. These two specified flange parts 131 may be on the upper side of the web part 120 or may be on the lower side of the web part 120.

### (Second Embodiment)

As a second embodiment, an example of a method for producing the front axle 100 shown in FIGS. 1-4 will hereinafter be described with reference to the drawings. This production method includes a first step, a second step and a third step, which will be described later, to be performed in this order. The first, second and third steps are hot working that is performed with the workpiece heated.

In the first step (die forging step), a specified forged product is produced by die forging a steel material. There is no limit to the die forging step, and a conventional die forging step may be adopted. Typically, the forged product obtained by the die forging step has flash. In the case where the forged product has flash, a flash-trimming step is performed before the forged product is subjected to the second step. There is no limit to the flash-trimming step, and a conventional flash-trimming step may be adopted.

FIG. 5A is a perspective view of a part of the forged product 200 after subjected to the flash-trimming step. The forged product 200 includes a rough beam part 210 to be formed into the beam part 110. The rough beam part 210 includes a rough web part 220 to be formed into the web part 120, and four plate-shaped rough flange parts 230 protruding frontward and rearward from the upper side and lower side of the rough web part 220, respectively. All of the four rough flange parts 230 are specified rough flange parts 231 to be formed into the specified flange parts 131, respectively. On the forged product 200, parts 211 to be formed into the spring attachment seats 111 are formed.

FIG. 5B shows a cross section (a section perpendicular to the length direction LD) of the forged product 200. The cross section shown in FIG. 5B is a cross section at a portion to be formed into the bent portion 132. The four specified rough flange parts 231 are a first to a fourth rough flange part 231a to 231d to be formed into the first to fourth flange parts 131a to 131d, respectively.

The die forging step is carried out by moving dies (forging dies) in the direction in which the rough flange parts 230 protrude, that is, frontward and rearward in the front-rear direction HD (in the direction perpendicular to the extending direction of the rough web part 220 in cross section). The forging dies are paired with each other with the center line of the rough web part 220 defined as a contact face. Therefore, draft angles are set for the rough flange parts 230. In FIG. 5B, draft angles Q and Q' to the die forging direction (front-rear direction HD) are shown. Because of these draft angles, each of the rough flange parts 230 becomes thinner at the edge. The boundary between two rough flange parts that are adjacent to each other in the front-rear direction HD is the top or bottom edge of the forged product 200.

A steel material used as a workpiece subjected to the die forging step typically has a proper shape for the die forging. Such a steel material can be produced by a preforming step of preforming a billet that is a starting material. In other words, the steel material may be a preformed product. There is no limit to the preforming step, and a conventional preforming step may be adopted. For example, the preforming step may include a billet rolling step and/or a bending step. The preforming step is typically hot working.

FIGS. 6A and 6B are sectional views showing an exemplary second step. In the second step, the specified rough flange parts 231 are pressed in the up-down direction VD by at least one first die 310, and thereby, a first bent portion 232a that curves outward in the up-down direction VD of the forged product 200 (rough web part extending direction in a cross section of the forged product) is formed on each of the specified rough flange parts 231. The at least one first die 310 is movable in the front-rear direction HD (in a direction perpendicular to the rough web part extending direction in a cross section of the forged product).

In the second step, first, as shown in FIG. 6A, the forged product 200 is placed between a lower first die 310 and an upper first die 310. Each of the first dies 310 has a first inclined surface 310a and a second inclined surface 310b that form an angle P greater than 180 degrees with each other. The angle P is within a range as described above. The first inclined surface 310a and the second inclined surface 310b may be curved surfaces. From another point of view, each of the first dies 310 is a convex die. The convex die has a convex portion bulging toward the rough web part, and the convex portion includes two adjacent surfaces (a first inclined surface 310a and a second inclined surface 310b). Each of these surfaces inclines in such a manner to become more distant from the web part at an outer side in the web part extending direction in cross section.

In the example shown in FIG. 6A, the angle between the extending direction of the rough web part 231 in cross section (front-rear direction HD) and the first inclined surface 310a (or the second inclined surface 310b) is a half of the angle P. However, the angle between the extending direction of the rough web part 231 in cross section (front-rear direction HD) and the first inclined surface 310a may be different from the angle between the extending direction of the rough web part 231 in cross section (front-rear direction HD) and the second inclined surface 310b.

As shown in FIG. 6A, the second step may be carried out with the forged product 200 held between two third dies 330 from opposite sides along the front-rear direction HD (along the rough web part extending direction in cross section). Holding the forged product 200 between the third dies 330 makes it possible to perform the second step accurately. Holding the forged product 200 between the third dies 330 further reduces a risk of buckling of each boundary portion between the rough flange parts 230 (or the specified rough flange parts 231) that are adjacent in the front-rear direction.

Next, as shown in FIG. 6B, the upper first die 310 is moved down to press the forged product 200. Specifically, the first specified rough flange part 231a is pressed by the first inclined surface 310a of one of the first dies 310, and the second specified rough flange part 231b is pressed by the second inclined surface 310b of this first die 310. At the same time, the third specified rough flange part 231c is pressed by the first inclined surface 310a of the other first die 310, and the fourth specified rough flange part 231d is pressed by the second inclined surface 310b of this first die 310. From another point of view, each of the convex dies (each of the upper and lower first dies 310) is inserted in between opposite two specified rough flange parts (between the first and second specified rough flange parts 231a and 231b or between the third and fourth specified rough flange parts 231c and 231d). Thereby, the respective edges of these specified rough flange parts are bent outward in the web part extending direction in cross section (in the up-down direction VD). Thus, the first bent portions 232a are formed into the specified flange parts 231a and 231d by the second step.

FIGS. 7A and 7B are sectional views showing an exemplary third step to be performed next. In the third step, the edges 232ae of the first bent portions 232a are pressed by at least one second die 320, whereby the edges 232ae of the first bent portions 232a are deformed inward in the up-down direction VD, and the second bent portions 232b are formed in the specified rough flange parts 231a to 231d. The at least one second die 320 is moved in the up-down direction VD.

In the third step, first, as shown in FIG. 7A, the forged product 200 is placed between a lower second die 320 and an upper second die 320. Each of the second dies 320 has a concave portion 320g. The concave portion 320g includes a first surface (bottom surface) 320a and second surfaces (side surfaces) 320b. The first surface 320a is to press the edges 232ae inward in the vertical direction VD. The second surfaces 320b are to keep the edges 232ae from deforming in the front-rear direction HD. In another point of view, each of the second dies 320 is a concave die with a concave portion 320g.

As shown in FIG. 7A, the third step may be performed with the rough web part 220 of the forged product 200 held between two fourth dies 340 from opposite sides along the front-rear direction HD (along the direction perpendicular to the extending direction of the rough web part 220 in cross section). Holding the forged product 200 between the fourth dies 340 makes it possible to perform the third step accurately. Holding the forged product 200 between the fourth dies 340 further prevents deformation of the rough web part 220.

Next, as shown in FIG. 7B, the upper second die 320 is moved down to press the forged product 200. Specifically, the first surface 320a of the upper second die 320 presses the edge 231ae of the first specified rough flange part 232a, and the second surfaces 320b of the upper second die 320 press the edge 231ae of the second specified rough flange part 231b. At the same time, the first surface 320a of the lower second die 320 presses the edge 232ae of the third specified rough flange part 231c, and the second surfaces 320b of the lower second die 320 press the edge 232ae of the fourth specified rough flange part 231d. From another point of view, while the edges of the specified rough flange parts 231a to 231d are retained from outside in the direction perpendicular to the extending direction of the web part 220 in cross section (in the front-rear direction HD), the edges are pressed from outside in the extending direction of the rough web part 220 in cross section (in the up-down direction VD). From still another point of view, the edges of the specified rough flange parts 231a to 231d, which are bent outward, are placed in the concave portion 320g of the concave dies (second dies 320), and the edges are pressed from outside in the extending direction of the rough web part 220 in cross section (in the up-down direction VD). By the third step, the second bent portions 232b are formed in the specified flange parts 231a to 231d.

In this way, a forged product 201 with second bent portions 232b is obtained. Each of the second bent portions 232b is of the same shape as the bent portion 132. In other words, usually, the second bent portions 232b become the bent portions 132.

In FIGS. 7A and 7B, the respective first surfaces 320a of the second dies 320 are flat. In each of the second dies 320, the part of the first surface 320a to press the boundary 130a (see FIG. 4) and the parts of the first surface 320a to press the edges 232ae are at the same vertical position (at the same position in the up-down direction VD). However, by positioning the parts of the first surface 320a to press the edges 232ae at a shallower level than any other part of the bottom surface, it is possible to deform the first bent portions 232a such that their edges 232ae are positioned on the inner side of the boundary 320a. In this case, the front axle beam has a maximum width (a maximum dimension in the up-down direction VD) in the region where the web part 220 is present.

The forged product 201 obtained by the first to third steps has almost the same outer shape as the front axle 100. The obtained forged product 201 may be subjected to various steps as needed. Those steps include, for example, a coining step, a boring step, a heating step, a straightening step, surface-treating step, a coating step, and the like. These steps may be carried out in a conventional manner. Then, the front axle 100 is produced.

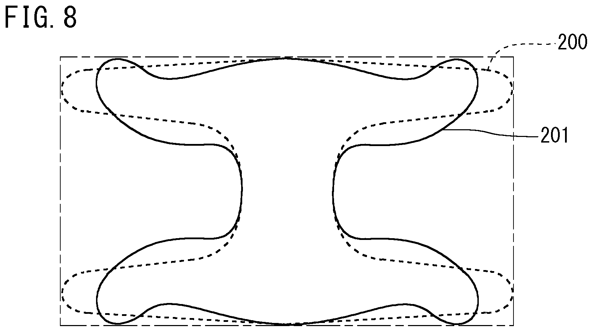

In FIG. 8, the outline of a cross section of the forged product 200 before processed in the second step and the outline of a cross section of the forged product 201 after processed in the third step are shown in an overlap manner. In Fig. 8, further, the outline of a cross section of the forged product 200 is enclosed by a rectangle drawn by an alternate long and short dash line.

One of the measures to improve the rigidity of a front axle is increasing the respective dimensions in the front-rear direction HD of the flange parts. Simply increasing the dimensions in the front-rear direction HD of the flange parts will result in an increase in the dimension in the front-rear direction HD of the front axle. In the production method according to the embodiment, which includes the first to third steps, the flange parts protruding in the front-rear direction HD are bent. Thus, each of the flange parts has a second bent portion. Thereby, the dimension of the front axle in the front-rear direction HD is decreased. Accordingly, the production method according to the embodiment makes it possible to improve the rigidity of a front axle without increasing the size.

In the production method including the first and second steps, as shown in FIG. 6B, the edges of the flange parts are bent outward in the web part extending direction in cross section (in the up-down direction VD). Thus, each of the flange parts has a first bent portion. Accordingly, the production method according to the embodiment makes it possible to improve the rigidity of a front axle.

### (Other Embodiments)

In the embodiments above, a case of producing a front axle 100 in which all the four flange parts 130 are the specified flange parts 131. However, when only two vertically arranged (arranged in the up-down direction VD) flange parts of the four flange parts 130 are the specified flange parts 131, the front axle can be produced in a similar manner.

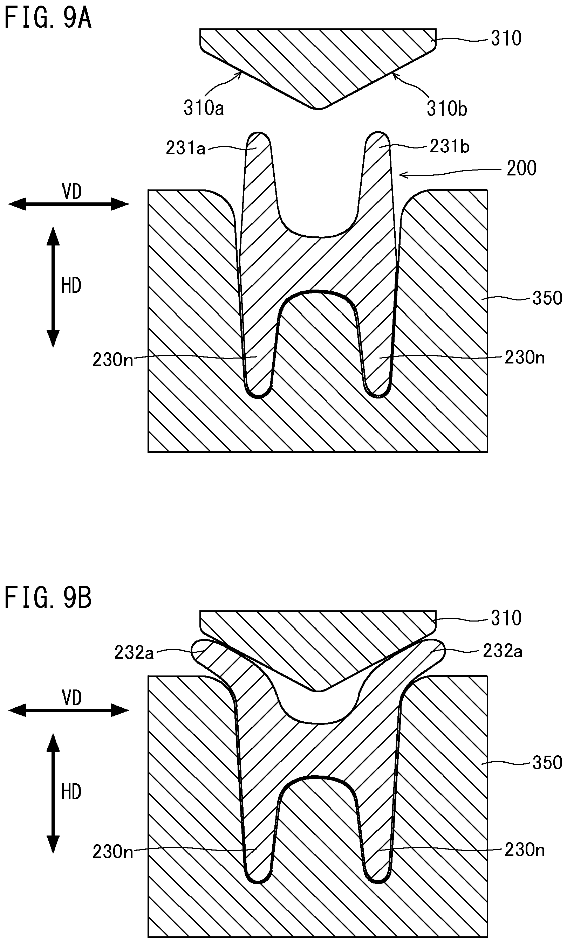

In the following paragraphs, a normal rough flange part that is not the specified rough flange part is referred to as a normal rough flange part 230n in some cases. When a specified rough flange part 231 and a normal rough flange part are arranged in the front-rear direction HD, a bent portion 232 is formed only on the specified rough flange part 231 in the bending step (the second and third steps). In this regard, if a force is applied only to the specified rough flange part 231, the normal rough flange part 230n may be displaced with the boundary between the rough web part 220 and the specified rough flange part 231 serving as a pivot. In order to prevent such a displacement, it is preferred that the bending step is performed with the normal rough flange part 230n kept from being displaced. FIGS. 9A and 9B are cross-sectional views showing an exemplary second step that prevents a displacement of the normal rough flange part 230n.

The cross-sectional view of FIG. 9A shows a state before the start of deformation in the second step, and the cross-sectional view of FIG. 9B shows a state on completion of deformation in the second step. The forged product 200 shown in FIGS. 9A and 9B include a first specified rough flange part 231a and a second specified rough flange part 231b that are arranged in the up-down direction VD, and two normal rough flange parts 230n that are arranged in the up-down direction VD. The two normal flange parts 230n are fitted in concave portions of a fixed die 350. In other words, the fixed die 350 has concave portions in which the normal rough flange parts 230n are to be fitted in. By using the fixed die 350, it becomes possible to perform the second step with the two normal rough flange parts 230n held in fixed positions. Above the two specified rough flange parts 231, the first die 310 is set.

In the second step, usually, forces to deform the normal rough flange parts 320n inward in the up-down direction VD act on the normal flange parts 320n. For this reason, rather than the fixed die 350 shown in FIG. 9A, a die which holds only the respective inner sides of the normal rough flange parts 230n may be used.

Next, as shown in FIG. 9B, the first die 310 is moved down to press the specified rough flange part 231a with the first surface 310a and to press the specified flange part 231b with the second surface 310b. Thereby, the first bent portions 232a are formed. In this way, the second step is performed.

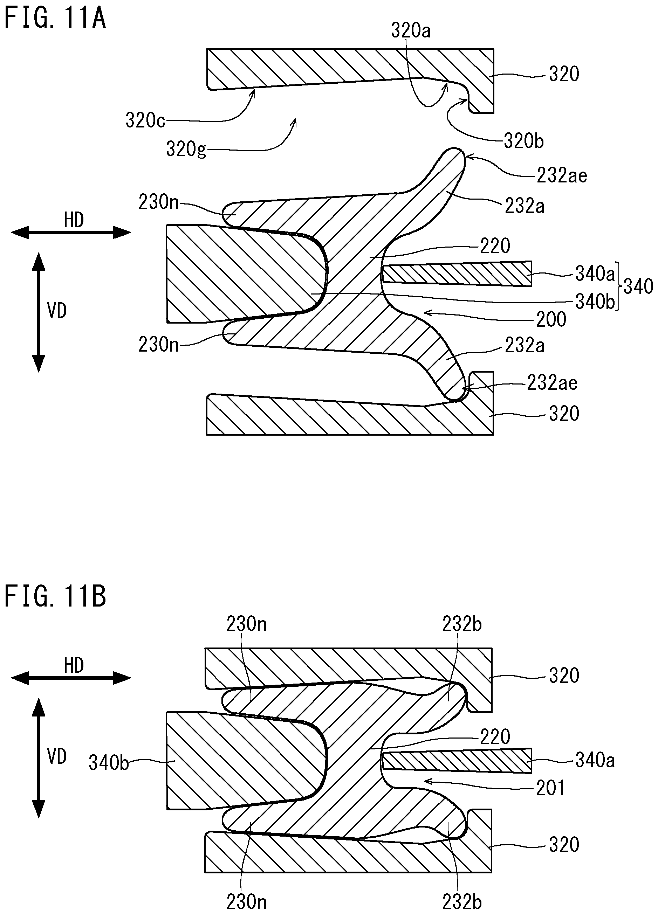

FIGS. 10A and 10B are cross-sectional views showing an exemplary third step to be performed next, and FIGS. 11A and 11B are cross-sectional views showing another exemplary third step. The step shown in FIGS. 10A and 10B is the same as the step shown in FIGS. 7A and 7B, and a repetition of the same description is avoided. In this third step, the edges 232ae of the first bent portions 232a are pressed by the second dies 320, and thereby, the second bent portions 232b are formed. In this way, the third step is performed.

In the third step shown in FIGS. 11A and 11B, second dies 320 each of which has a surface (a third surface) 320c to press a normal rough flange part 320n are used. Each of the second dies 320 shown in FIG. 11A has a concave portion 320g. The concave portion 320g includes a first surface 320a and a second surface 320b, as well as the third surface 320c to press the normal rough flange part 320n.

In the third step shown in FIGS. 11A and 11B, holding dies 340 may be used. In this example, as the holding dies 340, a holding die 340a and a holding die 340b are used. The holding die 340a contacts the rough web part 220. The holding die 340b has a shape that permits the holding die 340b itself to contact the inner surfaces of the normal flange parts 230n and the rough web part 220. The use of the second dies 320 with the third surface 320c and the holding die 340b permits accurate positioning of the normal rough flange parts 230n.

In this third step, first, as shown in FIG. 11A, the forged product 200 is placed between the lower second die 320 and the upper second die 320, and the forged product 200 is held between the holding die 340a and the holding die 340b.

Next, as shown in FIG. 11B, the upper second die 320 is moved down to press the first bent portions 232a with the respective first and second surfaces 320a and 320b of the second dies 320, and thereby, the second bent portions 232b are formed. In the meantime, the normal rough flange parts 230n are pressed by the respective third surfaces 320c of the second dies 320. This prevents displacements of the normal rough flange parts 230n.

In the above-described way, a forged product 201 with second bent portions 232b is obtained. As the steps after the third step have been already described, the description thereof is omitted.

When only one of the four flange parts 130 is the specified flange part 131, only the specified flange part 131 is bent in the second step and the third step. In this case, as described above, it is preferred that the second and third steps are performed while the normal rough flange part 230n adjacent to the specified rough flange part 231 in the front-rear direction is prevented from being displaced.

### EXAMPLES

The present invention will hereinafter be described in more detail by giving specific examples.

The rigidity of a beam part with a bent portion, which is an inventive example, and the rigidity of a beam part without a bent portion, which is a comparative example, were evaluated by simulation. In the simulation, samples each having a length of 100 mm and the same cross-sectional shape at any position in the length direction were used as models. Sample 1 and Sample 2 were assumed to have Young's modulus of 210 GPa and Poisson's ratio of 0.293 as their properties. The simulation was conducted by the finite element method. Sample 1 and Sample 2 were assumed to be equal in mass. In other words, Sample 1 and Sample 2 were assumed to be equal in cross-sectional area along a direction perpendicular to the length direction.

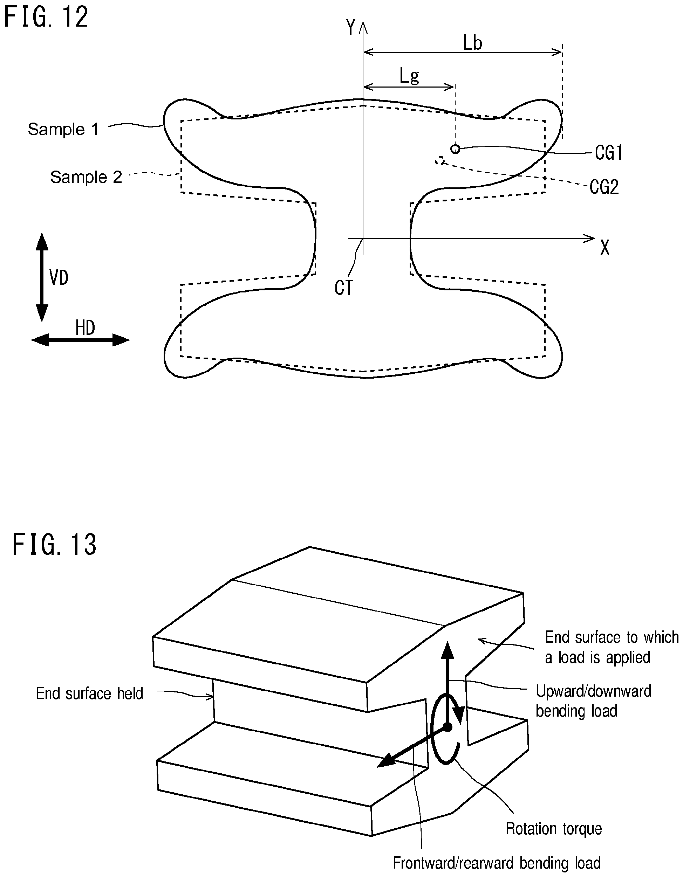

FIG. 12 shows the cross-sectional shape of Sample 1 of an inventive example and the cross-sectional shape of Sample 2 of a comparative example. In the cross section shown in FIG. 12 (in the section along a direction perpendicular to the length direction LD), the sectional shape of Sample 1 and the sectional shape of Sample 2 are both symmetrical laterally and vertically. The flange parts of Sample 2 were assumed to protrude frontward and rearward in the front-rear direction HD from the upper side and the lower side of the web part. The draft angles Q and Q' (see FIG. 5) of Sample 2 were assumed to be 5 degrees.

In the sectional view of FIG. 12, an XY coordinate system was assumed with the center of gravity CT of each sample set as an origin. The X axis of the XY coordinate system was parallel to the front-rear direction HD of the beam part, and the Y axis of the XY coordinate system was parallel to the up-down direction VD of the beam part. Then, the center of gravity of the part of each sample in the positive X and positive Y region, that is, the center of gravity of a quarter cross section of each sample was calculated. The center of gravity CG1 of the quarter cross section of Sample 1 and the center of gravity CG2 of the quarter cross section of Sample 2 are shown in FIG. 12. The coordinates of these were as follows. The coordinate values indicate distance (unit: mm).
Center of gravity CG1 of Sample 1: (X, Y) = (22.111, 23.318)
Center of gravity CG2 of Sample 2: (X, Y) = (21.982, 21.135)

As shown above, the X coordinate and the Y coordinate of the center of gravity CG1 of Sample 1 of an inventive example were greater than those of the center of gravity CG2 of Sample 2. The greater X coordinate and the greater Y coordinate bring out an effect that an increase in second moment of area against bending deformation caused by a frontward/rearward load, an increase in polar moment of inertia against torsion, and an increase in second moment of area against bending deformation caused by an upward/downward load are achieved while the weight is kept light.

The rigidity of Sample 1 and Sample 2 against the loads applied thereto as shown in FIG. 13 were calculated by simulation. Specifically, while one end surface of each sample was being held, loads were applied to the other end surface in the directions shown in FIG. 13. Based on the frontward/rearward load shown in FIG. 13, the rigidity in the front-rear direction was calculated. Based on the upward/downward load shown in FIG. 13, the rigidity in the up-down direction was calculated. Based on the rotation torque shown in FIG. 13, the torsional rigidity was calculated. The results are shown in Table 1.

**TABLE 1**

| | Rigidity (N/m) | | Rigidity of Sample 1/ Rigidity of Sample 2 (%) |
|---|---|---|---|
| | Sample 1 | Sample 2 (Comparative Example) | |
| Rigidity in Front-Rear Direction | 1.8827×10⁶ | 1.7963×10⁶ | 104.8 |
| Rigidity in Up-Down Direction | 9.4365×10⁵ | 8.2383×10⁵ | 114.5 |
| Torsional Rigidity | 1.7957×10⁶ | 1.7615×10⁶ | 101.9 |

As shown in TABLE 1, the rigidity in the front-rear direction and the torsional rigidity of Sample 1 of an inventive example were higher than those of Sample 2 of a comparative example. The rigidity in the up-down direction of Sample 1 was much higher than that of Sample 2.

The results show that a front axle including a beam part with a bent portion according to the embodiment has increased rigidity with the same weight. This means that it is possible to reduce the weight of the front axle without decreasing the rigidity. This further means that it is possible to obtain a front axle having a cross-sectional size comparable to or smaller than that of a conventional front axle and having rigidity comparable to or higher than that of the conventional front axle.

### INDUSTRIAL APPLICABILITY

The present invention is applicable to front axle beams.

### LIST OF REFERENCE SYMBOLS

100: front axle (front axle beam)
110: beam part
111: spring attachment seat
120: web part
130: flange part
131: specified flange part
132: bent portion
150: king-pin attachment part
200, 201: forged product
210: rough beam part
220: rough web part
230: rough flange part
230n: normal rough flange part
231: specified rough flange part
232a: first bent portion
232b: second bent portion
310: first die
310a: first inclined surface
310b: second inclined surface
320: second die
320a: first surface
320b: second surface
330: third die
340: fourth die
LD: length direction
HD: front-rear direction
VD: up-down direction

## Claims

1. A method for producing a front axle beam including a beam part, the beam part including a web part and flange parts joined on both sides of the web part and having an H-shaped cross section, comprising:
placing the flange parts between dies, and forging the flange parts with the dies while pinching the flange parts from opposite sides in a direction in which the flange parts protrude; and
pressing at least one specified flange part, which is at least one of the flange parts, in a direction perpendicular to a web part extending direction in the cross section of the beam part to bend an edge of the specified flange part outward in the web part extending direction in the cross section of the beam part.

2. The method for producing a front axle beam according to claim 1, wherein a convex die is inserted in between the specified flange part and another one of the flange parts located opposite to the specified flange part to bend the edge of the specified flange part outward in the web part extending direction in the cross section of the beam part.

3. The method for producing a front axle beam according to claim 1 or 2, further comprising pressing the bent edge of the specified flange part from outside in the web part extending direction in the cross section of the beam part while retaining the bent edge from outside in the direction perpendicular to the web part extending direction in the cross section of the beam part.

4. The method for producing a front axle beam according to claim 3, wherein the bent edge of the specified flange part is pressed from outside in the web part extending direction in the cross section of the beam part such that the front axle beam has a maximum width in a region where the web part is present in the cross section of the beam part.

5. The method for producing a front axle beam according to any one of claims 2 to 4, wherein:
the convex die includes a convex portion bulging toward the web part, the convex portion including two adjacent surfaces; and
each of the adjacent surfaces inclines in such a manner to become more distant from the web part at an outer side in the web part extending direction in the cross section of the beam part.

6. The method for producing a front axle beam according to any one of claims 3 to 5, wherein the bent edge of the specified flange part is placed in a concave portion of a concave die, and is pressed from outside in the web part extending direction in the cross section of the beam part.

7. A front axle beam including a beam part including a web part and flange parts joined on both sides of the web part and having an H-shaped cross section, wherein
at least one of the flange parts has a bent portion in which a thickness center line of the flange part curves outward in a web part extending direction in the cross section of the beam part.
